# EUROPÄISCHE PATENTANMELDUNG

(11) **EP 0 800 977 A2**
(43) Veröffentlichungstag der Anmeldung: **15.10.1997**
(21) Anmeldenummer: 97104741.0
(22) Anmeldetag: 20.03.1997
(51) Int. Cl.: B62B 5/02

(54) **Transportvorrichtung mit motorisch angetriebener Treppensteigvorrichtung**

(30) Priorität: 11.04.1996 DE 19614319
(71) Anmelder: Alber Antriebstechnik GmbH, 72458 Albstadt (DE)
(72) Erfinder: Alber, Ulrich, 72459 Albstadt (DE)
(74) Vertreter: Möbus, Rudolf, Dipl.-Ing.

(57) **Zusammenfassung**

Eine Transportvorrichtung (10) mit an einem Gestell (11) angeordneten Laufrädern (12, 13) und einer elektromotorisch angetriebenen Treppensteigvorrichtung (16), wobei der Elektromotor (17) der Treppensteigvorrichtung eine Welle (19) antreibt, an deren Enden Kurbelarme (20, 21) befestigt sind, die drehbar an Trägern (22, 23) mit an ihrem unteren Ende angeordneten Stützrollen (24, 25) gelagert sind, und die Träger (22, 23) jeweils am Anlenkpunkt (27, 28) des Kurbelarmes (20, 21) über ein 1:1-Kettengetriebe (29, 31, 34; 30, 32, 35) mit einem koaxial zur Welle (19) angeordneten Gestellteil (36, 37) verbunden sind.

## Beschreibung

Die Erfindung betrifft eine Transportvorrichtung mit an einem Gestell angeordneten Laufrädern und einer elektromotorisch angetriebenen Treppensteigvorrichtung, wobei der Elektromotor der Treppensteigvorrichtung eine Welle antreibt, an deren Enden Kurbelarme befestigt sind, die drehbar an Trägern mit an ihrem unteren Ende angeordneten Stützrollen gelagert sind.

Eine solche Transportvorrichtung ist aus der DE 195 19 109 bekannt. Die Träger dieser bekannten Vorrichtung sind linear an der Vorrichtung, beispielsweise über oberhalb der Laufräder am Gestell angelenkte Teleskopstangen, geführt. Die Träger führen aufgrund des exzentrischen Kurbelantriebes und der linearen Führung der Träger eine zur Überwindung von Treppenstufen notwendige Hub- und Schrittbewegung aus.

Der vorliegenden Erfindung liegt die Aufgabe zugrunde, eine Transportvorrichtung mit einer Treppensteigvorrichtung zu schaffen, die konstruktiv noch einfacher ist und weniger Einbauraum benötigt als die bekannte Vorrichtung.

Die Aufgabe wird mit einer Transportvorrichtung der eingangs genannten Art erfindungsgemäß dadurch gelöst, daß die Träger jeweils am Anlenkpunkt des Kurbelarmes über ein 1:1-Kettengetriebe mit einem koaxial zur Welle angeordneten Gestellteil verbunden sind. Gegenüber der oben zitierten bekannten Vorrichtung ist die lineare Führung der Träger nun durch eine Führung mittels des Kettengetriebes ersetzt. Das Kettengetriebe greift dabei zwischen dem Anlenkpunkt des Kurbelarmes und einem Gestellteil in Höhe der Welle an. Diese Führung benötigt somit weit weniger Einbauvolumen, als die lineare Führung der Träger bei der bekannten Vorrichtung, bei der die linearen Führungen relativ weit oben an einem Querholm des Gestelles angelenkt sind. Das Kettengetriebe kann von einem koaxial zur Welle angeordneten und drehfest an dem Gestellteil befestigten ersten Ritzel und einen am Anlenkpunkt des Kurbelarmes drehfest am Träger angeordneten zweiten Ritzel und von einer über beide Ritzel geführten Kette oder einem Zahnriemen gebildet sein. Das Kettengetriebe benötigt also nur sehr wenig Teile, die einfach herzustellen und zu montieren sind. Zweckmäßigerweise kann die gesamte Treppensteigvorrichtung zwischen den an Achszapfen auf der Außenseite des Gestelles montierten Laufrädern am Gestell angeordnet sein. Hierbei ist es vorteilhaft, wenn die gesamte Treppensteigvorrichtung abnehmbar am Gestell angeordnet ist. Bei Nichtgebrauch kann sie abgenommen werden, wodurch sich das Gesamtgewicht der Transportvorrichtung erheblich verringert. Auch eine Nachrüstung bereits vorhandener Transportvorrichtungen ohne Treppensteigvorrichtung mit der erfindungsgemäßen Treppensteigvorrichtung ist hierdurch möglich. Zur Vergrößerung der Weite der Schrittbewegung, die von den Stützrollen der Träger ausgeführt werden, können die Träger eine leicht abgewinkelte Form aufweisen. Zur Erhöhung der Betriebssicherheit kann außerdem an mindestens einem der Laufräder eine Klemmkörperbremse angeordnet sein. Diese Klemmkörperbremse kann beispielsweise mit einem Tastrad gekoppelt sein, das automatisch ein ungewolltes Überfahren einer Kante einer Treppenstufe ertastet und mechanisch die Klemmkörperbremse auslöst.

Nachfolgend wird ein bevorzugtes Ausführungsbeispiel einer erfindungsgemäßen Transportvorrichtung mit Bezug auf die Zeichnung näher erläutert.

Hierbei zeigen:
- Fig. 1: eine Ansicht von hinten auf eine Transportvorrichtung mit einer Treppensteigvorrichtung in Ruhestellung;
- Fig. 2: eine Teilseitenansicht auf die Transportvorrichtung nach Fig. 1 bei aktivierter Treppensteigvorrichtung;
- Fig. 3 - 10: Seitenansichten der Transportvorrichtung nach Fig. 1 mit Last in verschiedenen Positionen beim Steigen einer Treppenstufe;
- Fig. 11: eine Teilseitenansicht einer Transportvorrichtung mit Bremsvorrichtung;
- Fig. 12: eine der Fig. 11 entsprechende Seitenansicht mit aktivierter Bremsvorrichtung.

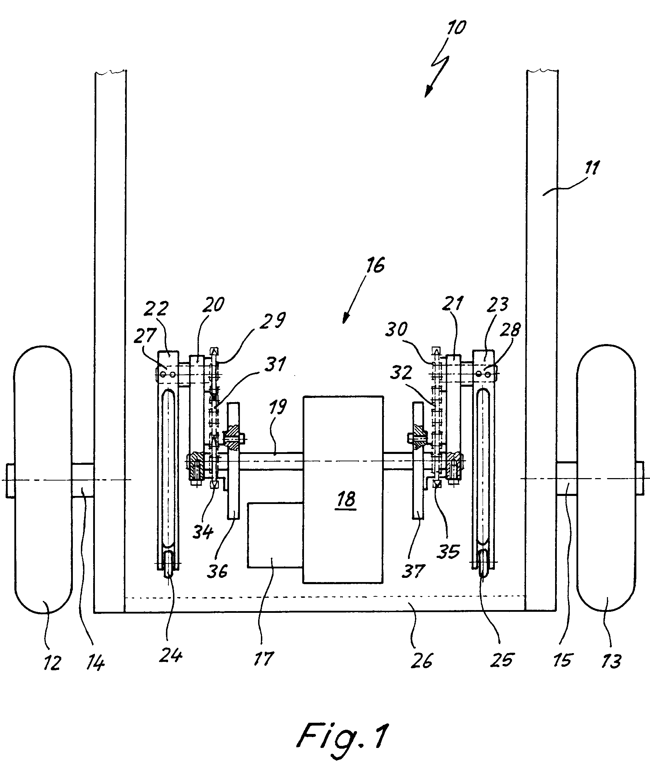

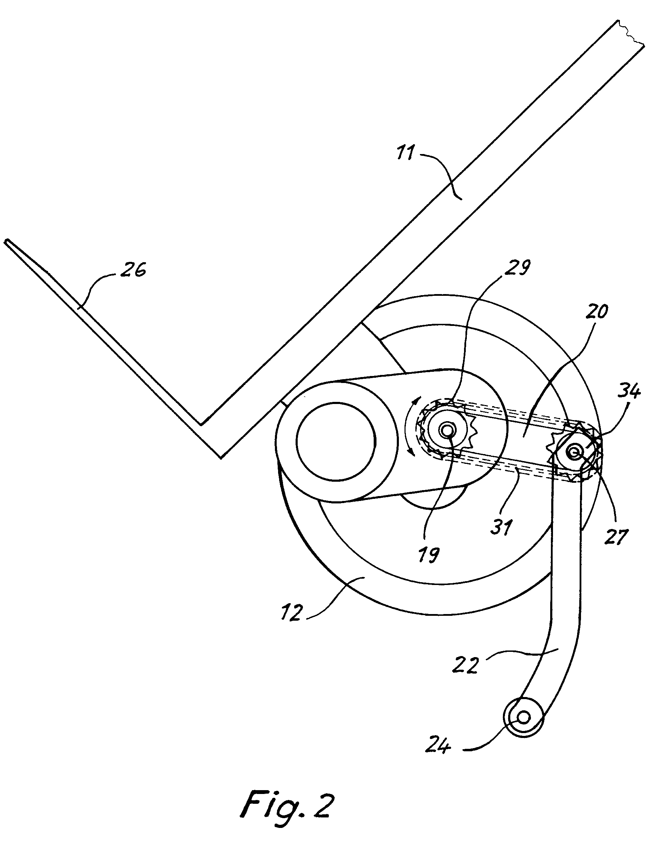

Die in Fig. 1 dargestellte Transportvorrichtung 10 weist ein Gestell 11 auf, an dessen oberem Ende zwei nicht dargestellte Handgriffe angeordnet sind. Außen am Gestell 11 sind zwei Laufräder 12 und 13 an Achszapfen 14 und 15 gelagert. Innerhalb des Gestells 11 ist eine Treppensteigvorrichtung 16 angeordnet. Diese weist einen Elektromotor 17 auf, der über ein Untersetzungsgetriebe 18 eine Welle 19 antreibt. An den beiden Enden der Welle 19 sind Kurbelarme 20 und 21 drehsicher befestigt. An deren äußerem Ende wiederum sind Träger 22 und 23 angelenkt, die an ihrem unteren Ende mit Stützrollen 24 und 25 versehen sind. In der in Fig. 1 gezeigten Ruhestellung der Treppensteigvorrichtung sind diese Stützrollen 24 und 25 oberhalb des Bodens sowie einer Lastaufnahmefläche 26 der Transportvorrichtung 10 angeordnet und also nicht belastet. Die Anlenkstellen 27 und 28 der Kurbelarme 20 und 21 an den Trägern 22 und 23 sind außerdem jeweils mit einem Zahnritzel 29, 30 verbunden. Diese Zahnritzel 29 und 30 sind drehfest bezüglich der Träger 22 und 23, jedoch drehbar gegenüber den Kurbelarmen 20 und 21. Über die Ritzel 29 und 30 sind Zahnketten 31 und 32 zu zweiten Ritzeln 34 und 35 geführt. Diese Ritzel 34 und 35 sind koaxial zur Welle 19 und drehfest an Gestellteilen 36 und 37 befestigt. Wie die Seitenansicht nach Fig. 2 zeigt, weisen die Ritzel 29 und 34 bzw. 30 und 35 die gleichen Durchmesser auf. Sie bilden daher zusammen mit den Zahnketten 31 und 32 zwei 1:1-Kettengetriebe. Diese Kettengetriebe sorgen dafür, daß die Träger 22, 23 in allen Betriebspositionen der Treppensteigvorrichtung eine annähernd vertikale Lage einnehmen. Dies sei anhand von Fig. 2 für den Träger 22 verdeutlicht. Bei Antrieb der Welle 19 führt der Kurbelarm 20 und damit auch dessen Anlenkpunkt 27 am Träger 22 sowie das Ritzel 34 eine Kreisbewegung um die Welle 19 aus. Das Ritzel 29 ist feststehend, dreht sich also mit der Welle 19 nicht mit. Bei Rotation des zweiten Ritzels 34 beispielsweise in Uhrzeigerrichtung legt sich daher die Kette 31 je nach Position des Ritzels 34 um einen anderen Zahnbereich des Ritzels 29. Hierfür ist ein Ausgleich der Kette 31 in Gegenuhrzeigerrichtung notwendig. Dies wird auch durch das Ritzel 34 ermöglicht, das beweglich gegenüber dem Kurbelarm 20 angeordnet ist und sich daher bei Bewegung des Kurbelarmes 20 in Uhrzeigerrichtung in Gegenuhrzeigerrichtung drehen kann. Diese Drehbewegung wird jedoch auch auf den starr mit dem Ritzel 34 verbundenen Träger 22 übertragen. Auf diese Weise ist gewährleistet, daß dieser unabhängig von der Position des Kurbelarmes 20 stets seine in Fig. 2 gezeigte vertikale Stellung beibehält.

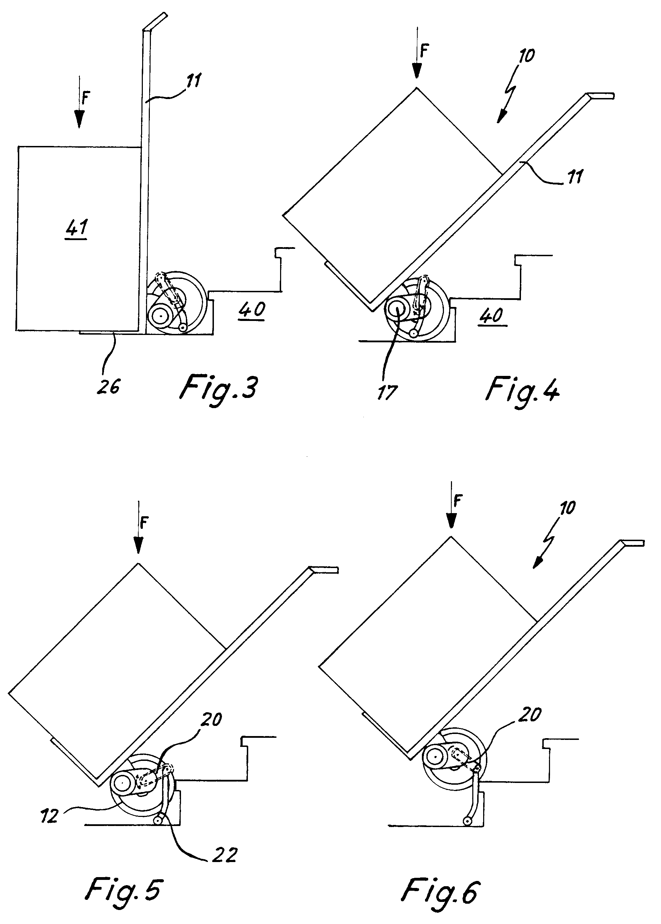

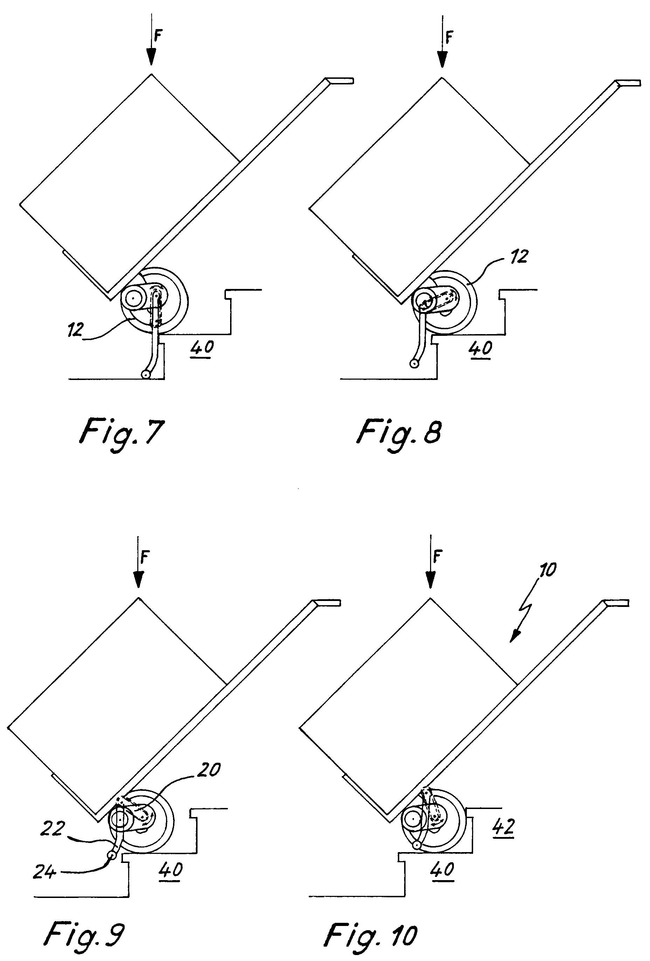

Die Fig. 3 bis 10 verdeutlichen nun, wie mit Hilfe der Treppensteigvorrichtung 16 eine Treppenstufe 40 überwunden werden kann. Fig. 3 zeigt die Ruhestellung der Vorrichtung 10. Auf der auf dem Boden abgestützten Ladefläche 26 ruht eine Last 41, das Gestell 11 steht senkrecht. Das Gestell wird anschließend gekippt (Fig. 4) und die Transportvorrichtung 10 bis an die Treppenstufe 40 herangefahren. Dann wird der Motor 17 eingeschaltet, wodurch der Kurbelarm 20 in Drehung versetzt wird. Mit Hilfe des Kettengetriebes bleibt dabei der Träger 22 in vertikaler Position und übernimmt somit ab einer bestimmten Winkelstellung des Kurbelarmes 20 die Lastaufnahme vom Laufrad 12 (Fig. 5). Beim Weiterdrehen des Kurbelarmes 20 wird die gesamte Vorrichtung 10 weiter hochgestemmt (Fig. 6), bis das Laufrad 12 über die Stufe 40 angehoben wird. Durch die exzentrische Anordnung der Welle 19 bezüglich der Achszapfen 14 und 15 der Laufräder 12 und 13 (Fig. 1) führt dabei die Vorrichtung 10 nicht nur eine Hubbewegung, sondern gleichzeitig auch eine Schrittbewegung aus, die dazu führt, daß das Laufrad 12 auf der Stufe 40 abgesenkt werden kann (Fig. 8). Das Weiterdrehen des Kurbelarmes 20 bewirkt dann ein "Einziehen" des Trägers 22 mit der Stützrolle 24 (Fig. 9) bis oberhalb der Treppenstufe 40. In dieser Position kann die Vorrichtung gegen die Kante der nächsten Treppenstufe 42 gefahren werden (Fig. 10), um diese Treppenstufe in gleicher Weise zu überwinden, wie in den Fig. 3 bis 9 gezeigt ist. Die Treppabwärtsbewegung der Vorrichtung 10 erfolgt auf analoge Weise. Sie wird deutlich, wenn man die Bildfolge 3 bis 10 in umgekehrter Reihenfolge betrachtet.

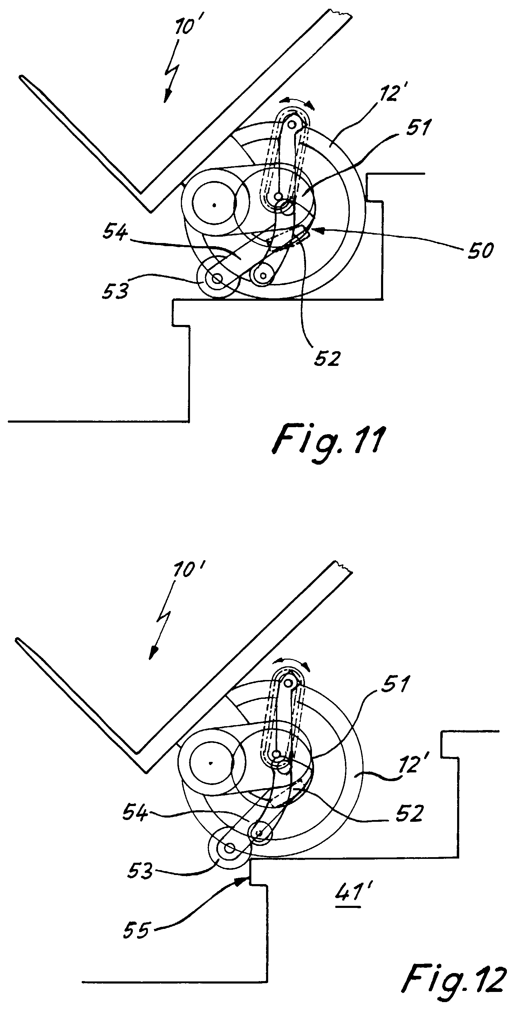

Die Fig. 11 und 12 zeigen eine Teilseitenansicht einer Transportvorrichtung 10', die mit einer Klemmkörperbremse 50 ausgestattet ist. Die Klemmkörperbremse 50 besteht aus einer Trommel 51 mit einem Klemmkörper 52 sowie einem Tastrad 53, das über einen Hebel 54 drehbar gelagert ist. Bei versehentlichem Überfahren der Kante 55 einer Treppenstufe 41' verschwenkt das Tastrad 53 an seinem Hebel 54 aufgrund der Schwerkraft nach unten. Durch diese Bewegung wird der Klemmkörper 52 mechanisch gegen die Wandung der Trommel 51 gepreßt, wodurch die Bewegung des Laufrades 12' blockiert wird.

## Patentansprüche

1. Transportvorrichtung mit an einem Gestell angeordneten Laufrädern und einer elektromotorisch angetriebenen Treppensteigvorrichtung, wobei der Elektromotor der Treppensteigvorrichtung eine Welle antreibt, an deren Enden Kurbelarme befestigt sind, die drehbar an Trägern mit an ihrem unteren Ende angeordneten Stützrollen gelagert sind, dadurch gekennzeichnet, daß die Träger (22, 23) jeweils am Anlenkpunkt (27, 28) des Kurbelarmes (20, 21) über ein 1:1-Kettengetriebe (29, 31, 34; 30, 32, 35) mit einem koaxial zur Welle (19) angeordneten Gestellteil (36, 37) verbunden sind.

2. Transportvorrichtung nach Anspruch 1, dadurch gekennzeichnet, daß das Kettengetriebe (29, 31, 34; 30, 32, 35) von einem koaxial zur Welle (19) angeordneten und drehfest an dem Gestellteil (36, 37) befestigten ersten Ritzel (34, 35) und einem am Anlenkpunkt (27, 28) des Kurbelarmes (20, 21) drehfest am Träger (22, 23) angeordneten zweiten Ritzel (29, 30) und von einer über beide Ritzel (29, 34; 30, 35) geführten Kette (31, 32) oder einem Zahnriemen gebildet ist.

3. Transportvorrichtung nach Anspruch 1 oder 2, dadurch gekennzeichnet, daß die Träger (22, 23) eine leicht abgewinkelte Form aufweisen.

4. Transportvorrichtung nach einem der Ansprüche 1 bis 3, dadurch gekennzeichnet, daß die Treppensteigvorrichtung (16) abnehmbar am Gestell (11) der Transportvorrichtung (10) angeordnet ist.

5. Transportvorrichtung nach einem der Ansprüche 1 bis 4, dadurch gekennzeichnet, daß die Laufräder (12, 13) an Achszapfen (14, 15) auf der Außenseite des Gestelles (11) gelagert sind, während die Treppensteigvorrichtung (16) zwischen den Laufrädern (12, 13) am Gestell (11) angeordnet ist.

6. Transportvorrichtung nach einem der Ansprüche 1 bis 5, dadurch gekennzeichnet, daß an mindestens einem der Laufräder (12') eine Klemmkörperbremse (50) angeordnet ist.
